# FASCICULE DE BREVET EUROPEEN

(11) **EP 3 163 091 B1**
(45) Date de publication et mention de la délivrance du brevet: **24.07.2024**
(21) Numéro de dépôt: 16195870.7
(22) Date de dépôt: 26.10.2016
(51) Int. Cl.: F04D 29/42, F04D 29/62, B60H 1/00, H02K 5/20

(54) **ENSEMBLE SUPPORT MOTEUR ET INSTALLATION DE CHAUFFAGE, DE VENTILATION ET/OU DE CLIMATISATION POUR VÉHICULE AUTOMOBILE CORRESPONDANTE**
MOTORAUFHÄNGUNGSANORDNUNG UND ENTSPRECHENDE ANLAGE ZUM HEIZEN, BELÜFTEN UND/ODER KLIMATISIEREN FÜR KRAFTFAHRZEUG
ENGINE MOUNT ASSEMBLY AND CORRESPONDING HEATING, VENTILATION AND/OR AIR-CONDITIONING SYSTEM FOR A MOTOR VEHICLE

(30) Priorité: 29.10.2015 FR 1560362
(43) Date de publication de la demande: 03.05.2017
(73) Titulaire: Valeo Systemes Thermiques, 78320 Le Mesnil Saint Denis (FR)
(72) Inventeur: CAPOULUN, Geoffroy, 78000 VERSAILLES (FR); LE GOFF, Morgan, 91360 EPINAY SUR ORGE (FR); FARKH, Alain, 78490 MONTFORT L'AMAURY (FR)
(74) Mandataire: Valeo Systèmes Thermiques

(56) Documents cités:
- EP-A1- 1 515 416
- DE-U1- 8 534 221
- FR-A1- 2 606 562
- KR-B1- 101 313 601

## Description

L'invention concerne le domaine des installations de ventilation, chauffage et/ou climatisation. L'invention concerne en particulier un ensemble support moteur pour une telle installation. Un ensemble support moteur selon l'art antérieur est divulgué dans les documents FR2606562 A1 ou KR101313601 B1.

Une installation de chauffage, de ventilation et/ou de climatisation de véhicule, notamment automobile est généralement utilisée pour distribuer de l'air dans l'habitacle du véhicule.

Dans une telle installation, le flux d'air circulant est propulsé par un groupe moto-ventilateur, aussi appelé pulseur, qui est monté sur le boîtier de l'installation de chauffage, de ventilation et/ou de climatisation au niveau d'une volute du boîtier assurant la canalisation du flux d'air généré par le groupe moto-ventilateur. Le groupe moto-ventilateur comporte notamment une roue de ventilateur logée dans la volute pour engendrer un flux d'air dans celle-ci, et un ensemble support moteur comprenant un moteur électrique apte à mettre en rotation la roue de ventilateur et un support moteur. Classiquement, le moteur est piloté par un module de commande.

Le support moteur est généralement solidarisé sur le boîtier de l'installation de chauffage, de ventilation et/ou de climatisation. Selon une solution connue, le support moteur porte également le module de commande.

Généralement, c'est le support moteur qui permet de monter l'ensemble support moteur sur le boîtier de l'installation de chauffage, de ventilation et/ou de climatisation, plus précisément au niveau de la volute.

Le support moteur forme alors un capot d'obturation d'une ouverture de la volute sur un côté de celle-ci.

Le support moteur est donc critique pour l'intégration de l'ensemble support moteur dans l'installation et doit répondre à de nombreuses exigences comme notamment une étanchéité par rapport à un risque d'intrusion d'eau, une performance aéraulique, ou encore un niveau de bruit acoustique prévu dans le véhicule.

Il est également connu de prévoir sur le support moteur un ou plusieurs canaux de refroidissement acheminant un flux d'air de refroidissement prélevé de préférence depuis l'intérieur de la volute et acheminé vers le moteur et avantageusement également vers le module de commande du moteur. Ainsi, le support moteur doit de plus répondre à une exigence de refroidissement du moteur et/ou du module de commande.

Selon le type d'installation de chauffage, de ventilation et/ou de climatisation, le boîtier, et notamment la volute, peut être de conception différente. Il s'avère nécessaire d'adapter notamment le support moteur destiné à venir se fixer sur la volute.

Aussi, des véhicules peuvent être prévus pour être disponibles aussi bien en conduite à droite, c'est-à-dire avec le volant à droite, qu'en conduite à gauche, c'est-à-dire avec le volant à gauche, la colonne de direction est dans ce cas susceptible d'être disposée différemment et donc l'agencement des éléments sous le capot est généralement modifié. Ceci oblige à prévoir des groupes moto-ventilateur spécifiquement adaptés au côté de la conduite.

Selon les solutions connues, le groupe moto-ventilateur, et en particulier l'ensemble support moteur, est conçu spécifiquement pour chaque application. Il n'existe pas de groupe moto-ventilateur, ni d'ensemble support moteur, standard.

En conséquence, pour chaque type d'installation de chauffage, de ventilation et/ou de climatisation, il est nécessaire d'adapter notamment l'ensemble support moteur du groupe moto-ventilateur. En particulier, le support moteur, qui permet entre autres l'assemblage de l'ensemble support moteur sur la volute du boîtier de l'installation de chauffage, de ventilation et/ou de climatisation dans le véhicule automobile, doit être modifié.

Or la reconception et/ou la modification des pièces du groupe moto-ventilateur peut s'avérer longue, en particulier pour le support-moteur qui est une pièce multifonctions et donc complexe.

Ceci s'avère contraignant et oblige de concevoir l'ensemble support moteur pour le groupe moto-ventilateur exclusivement selon un choix spécifique préalablement défini en fonction des besoins du constructeur automobile.

L'invention a donc pour objectif de pallier au moins partiellement ces problèmes de l'art antérieur en proposant un ensemble support moteur dont l'assemblage sur le véhicule, par exemple sur une volute d'installation de chauffage, de ventilation et/ou de climatisation, peut être adapté de façon simple selon les besoins du constructeur automobile.

A cet effet, l'invention a pour objet un ensemble support moteur destiné à être monté au niveau d'une volute, l'ensemble support moteur comprenant :
- un moteur, et
- un support moteur,
l'ensemble support moteur comportant une pièce de raccordement, d'une part, assemblée au support moteur et, d'autre part, destinée à être assemblée à la volute, de manière à former une interface entre le support moteur et la volute, la pièce de raccordement et le support moteur étant deux pièces distinctes, la pièce de raccordement présentant une première face en regard du support moteur et une deuxième face opposée destinée à coopérer avec la volute, dont la pièce de raccordement comprend au moins une portion de guidage d'un flux d'air de refroidissement présentant une entrée d'air au niveau de la deuxième face et débouchant au niveau de la première face.

Le moteur est notamment un moteur sans balai, appelé également machine synchrone auto-pilotée à aimants permanents.

La pièce de raccordement permet donc une adaptation de l'ensemble support moteur en fonction de l'application. En effet, on peut obtenir plusieurs configurations de l'ensemble support moteur, et donc du groupe moto-ventilateur comprenant un tel ensemble support moteur, qui diffèrent entre elles par la pièce de raccordement. Ainsi, en fonction de l'installation de chauffage, de ventilation et/ou de climatisation, c'est la pièce de raccordement qui varie tandis que les autres éléments peuvent être les mêmes d'une configuration à l'autre et donc être standardisés.

Il n'est donc plus impératif de concevoir un support moteur spécifique pour chaque application.

Il en résulte une baisse du coût de fabrication de l'ensemble support moteur et un gain de temps pour l'adaptation sur diverses installations de chauffage, de ventilation et/ou de climatisation. En particulier, il en résulte une standardisation des pièces les plus complexes comme le support moteur et le support du module de commande. Selon le contexte et les volumes de production, cette standardisation peut mener à une réduction des coûts de production.

Il en résulte une réduction des coûts et du temps de développement d'une application, ce qui peut être un avantage dans le cas d'un projet rétrofit (c'est-à-dire remplacement d'un produit déjà en production).

Ledit ensemble support moteur peut en outre comporter une ou plusieurs des caractéristiques ci-après, prises séparément ou en combinaison.

Du côté du support moteur, la première face de la pièce de raccordement peut être invariante d'une configuration de l'ensemble support moteur à l'autre dans la mesure où elle est conformée pour l'assemblage avec le support moteur qui peut être une pièce standard.

En revanche, l'adaptation se fait au niveau de la deuxième face de la pièce de raccordement qui est destinée à l'assemblage sur la volute du boîtier de l'installation de chauffage, de ventilation et/ou de climatisation et est donc susceptible de changer selon l'application. Il suffit d'adapter le design, autrement dit la conception, de la deuxième face destinée à être en interface avec la volute, et notamment avec une roue de ventilateur logée dans la volute, pour chaque application.

Selon un autre aspect de l'invention, la deuxième face de la pièce de raccordement présente une surface sensiblement lisse. Ainsi, le design de la deuxième face de la pièce de raccordement est optimisé pour correspondre à une meilleure interface avec que le flux d'air, c'est-à-dire de manière à réduire le risque de perturbation du flux d'air dans la volute.

La ou chaque portion de guidage du flux d'air de refroidissement est destinée à être traversée par un flux d'air de refroidissement en provenance de la volute de manière à faire circuler le flux d'air de refroidissement dans l'ensemble support moteur pour refroidir les éléments portés par le support moteur, à savoir le moteur et/ou un module de commande apte à piloter le moteur et monté également sur le support moteur.

C'est donc la pièce de raccordement qui intègre la fonction de refroidissement du moteur notamment, et non plus le support moteur comme dans les solutions de l'art antérieur. Le support moteur peut donc être simplifié.

Selon un autre aspect de l'invention, la pièce de raccordement présente un axe central, et les première et deuxième faces s'étendent selon des plans parallèles entre eux et perpendiculaires à l'axe central.

Selon un mode de réalisation particulier, la pièce de raccordement présente au moins une bride agencée radialement à l'extérieur de la zone de réception du support moteur et comprenant ladite au moins une portion de guidage du flux d'air de refroidissement.

Le moteur et la pièce de raccordement sont coaxiaux.

L'assemblage entre le support moteur et la pièce de raccordement d'une part, et entre la pièce de raccordement et la volute logeant la roue de ventilateur d'autre part, se fait suivant un même axe.

Avantageusement, la pièce de raccordement est réalisée dans un matériau plastique. Ceci permet une réalisation simple et peu coûteuse d'une telle pièce de raccordement qui assure plusieurs fonctions, notamment de montage de l'ensemble support moteur sur la volute, d'interface entre le support moteur et la volute, et de guidage d'un flux d'air de refroidissement pour refroidir le moteur notamment.

Selon un mode de réalisation, l'ensemble support moteur comprend un module de commande du moteur et un support du module de commande assemblé au support moteur, le module de commande étant disposé sur le support du module de commande du côté opposé au support moteur. L'ensemble formé par le module de commande, le support du module de commande et le support moteur est assemblé à la pièce de raccordement.

Le support du module de commande fait avantageusement office de support de palier pour le moteur.

Ainsi, tout le bloc formé par le module de commande, le support du module de commande, le moteur et le support moteur peut être assemblé à la volute via la pièce de raccordement. En conséquence, tous ces éléments peuvent être standards quelle que soit l'installation de chauffage, de ventilation et/ou de climatisation dans laquelle l'ensemble support moteur doit être intégré.

L'invention concerne aussi un groupe moto-ventilateur d'une installation de chauffage, de ventilation et/ou de climatisation, le groupe moto-ventilateur comprenant un ensemble support moteur tel que défini précédemment et une roue de ventilateur apte à être entrainée par le moteur de l'ensemble support moteur.

Selon un aspect de l'invention, la pièce de raccordement est destinée à être interposée entre le support moteur et la roue de ventilateur, lorsque le groupe moto-ventilateur est monté dans l'installation de chauffage, de ventilation et/ou de climatisation.

La pièce de raccordement forme donc une interface entre le support moteur et la roue de ventilateur destinée à être entraînée par le moteur et destinée à être reçue dans la volute, de manière à mettre en mouvement un flux d'air dans cette dernière.

Selon un aspect de l'invention, la deuxième face de la pièce de raccordement opposée à la première face agencée en regard du support moteur, est agencée en regard de la roue de ventilateur, lorsque l'ensemble support moteur est monté dans l'installation de chauffage, de ventilation et/ou de climatisation.

Avantageusement, la deuxième face de la pièce de raccordement présente une forme complémentaire de la forme de la roue de ventilateur, de façon à permettre l'assemblage par coopération de forme entre la pièce de raccordement et la roue de ventilateur logée dans la volute.

Selon un mode de réalisation, la deuxième face de la pièce de raccordement présente une forme sensiblement plate.

Selon un autre mode de réalisation, la deuxième face de la pièce de raccordement présente une forme annulaire sensiblement bombée en direction de la roue de ventilateur.

L'invention concerne également une installation de chauffage, de ventilation et/ou de climatisation pour véhicule automobile caractérisée en ce qu'elle comprend une volute et au moins un ensemble support moteur tel que défini précédemment monté sur la volute.

Seule la pièce de raccordement de l'ensemble support moteur est variable en fonction de l'installation de chauffage, de ventilation et/ou de climatisation, tous les autres éléments de l'ensemble support moteur, peuvent être standards. Cela permet une adaptation rapide comme une seule pièce, la pièce de raccordement, doit être conçue spécifiquement pour permettre l'intégration dans l'installation de chauffage, de ventilation et/ou de climatisation, ainsi qu'un gain de temps.

Par exemple, la pièce de raccordement peut être conçue pour permettre le montage de l'ensemble support moteur, et notamment du groupe moto-ventilateur comprenant cet ensemble support moteur, dans une installation de chauffage, de ventilation et/ou de climatisation aussi bien pour un véhicule adapté pour une conduite à gauche que pour un véhicule adapté pour une conduite à droite.

Selon un aspect de l'invention, la volute présente une ouverture sur un côté de la volute opposé à une admission d'un flux d'air et l'ensemble support moteur est agencé sur la volute de manière à obturer l'ouverture de la volute.

De la sorte, l'ensemble support moteur, une fois monté sur la volute, et en particulier sur la roue de ventilateur logée dans la volute, par le biais de la pièce de raccordement peut mettre en mouvement le flux d'air à l'intérieur de la volute et le flux d'air pulsé est guidé vers une sortie de la volute débouchant avantageusement dans un conduit d'air de l'installation de chauffage, de ventilation et/ou de climatisation.

Selon un aspect additionnel de l'invention, la pièce de raccordement comporte une jupe sensiblement cylindrique et une collerette à la périphérie de ladite jupe. La collerette de la pièce de raccordement est agencée en regard de la périphérie de la roue de ventilateur, lorsque l'ensemble support moteur est monté dans ladite installation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un groupe moto-ventilateur comprenant un ensemble support moteur selon l'invention monté sur une volute d'une installation de chauffage, de ventilation et/ou de climatisation,
- la figure 2 est une vue en éclaté d'un ensemble support moteur selon l'invention et d'une volute d'une installation de chauffage, de ventilation et/ou de climatisation,
- la figure 3 montre des éléments standards de l'ensemble support moteur de la figure 1 ou 2 pouvant être assemblés indifféremment avec une pièce de raccordement selon un premier ou un deuxième mode de réalisation,
- la figure 4 est une première vue partielle agrandie d'une partie d'une pièce de raccordement de l'ensemble support moteur de la figure 1 ou 2, assemblée à une volute d'une installation de chauffage, de ventilation et/ou de climatisation, et
- la figure 5 est une deuxième vue partielle agrandie d'une partie d'une pièce de raccordement de l'ensemble support moteur de la figure 1 ou 2, assemblée à une volute d'une installation de chauffage, de ventilation et/ou de climatisation, montrant une portion de guidage d'un flux d'air de refroidissement prévue sur la pièce de raccordement.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description on peut indexer certains éléments, autrement dit on peut par exemple mentionner un premier élément ou un deuxième élément. Dans ce cas, il s'agit d'un simple indexage pour différencier et dénommer des éléments proches, mais non identiques. Cet indexage n'implique pas une priorité d'un élément, par rapport à un autre. On peut aisément interchanger de telles dénominations sans sortir du cadre de la présente invention.

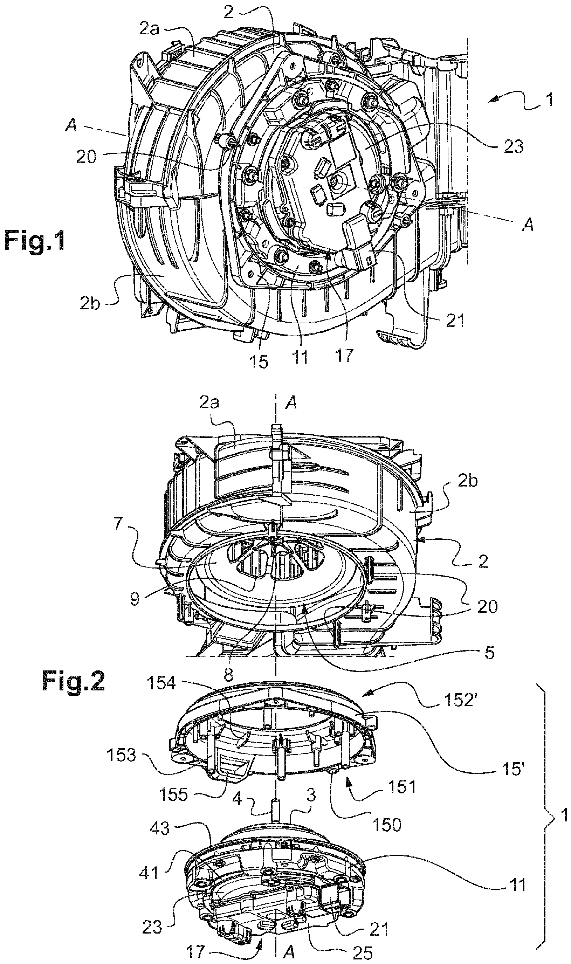

La figure 1 représente un groupe moto-ventilateur, également appelé pulseur, pour une installation de chauffage, ventilation et/ou de climatisation équipant par exemple un véhicule automobile.

Le groupe moto-ventilateur comporte un ensemble support moteur 1 destiné à être monté sur un boîtier de l'installation de chauffage, de ventilation et/ou de climatisation comprenant, selon le mode de réalisation décrit, une enveloppe 2 en forme de volute, ci-après désignée par volute 2.

La volute 2 est par exemple conformée sensiblement en spirale. A titre d'exemple non limitatif, la volute 2 peut être réalisée par assemblage de deux demi-volutes 2a et 2b.

Le groupe moto-ventilateur est destiné à être agencé de manière à faire circuler un flux d'air dans un conduit de l'installation de chauffage, de ventilation et/ou de climatisation. La volute 2 est raccordée à ce conduit d'air et permet d'introduire le flux d'air pulsé par le groupe moto-ventilateur dans le conduit d'air. Le conduit d'air de l'installation de chauffage, de ventilation et/ou de climatisation distribue le flux d'air vers des bouches de sortie (non représentées) s'ouvrant dans l'habitacle du véhicule.

Plus précisément, l'ensemble support moteur 1 du groupe moto-ventilateur est destiné à être monté sur la volute 2, notamment au niveau d'une ouverture sur un côté de la volute 2, avantageusement opposé à une admission d'un flux d'air dans la volute 2. Il peut s'agir d'un flux d'air extérieur prélevé à l'extérieur de l'habitacle, ou d'un flux d'air prélevé à l'intérieur de l'habitacle dit flux d'air recyclé, ou encore un mélange d'un flux d'air extérieur et d'un flux d'air recyclé.

L'ouverture sur le côté de la volute 2 est donc fermée par l'ensemble support moteur 1.

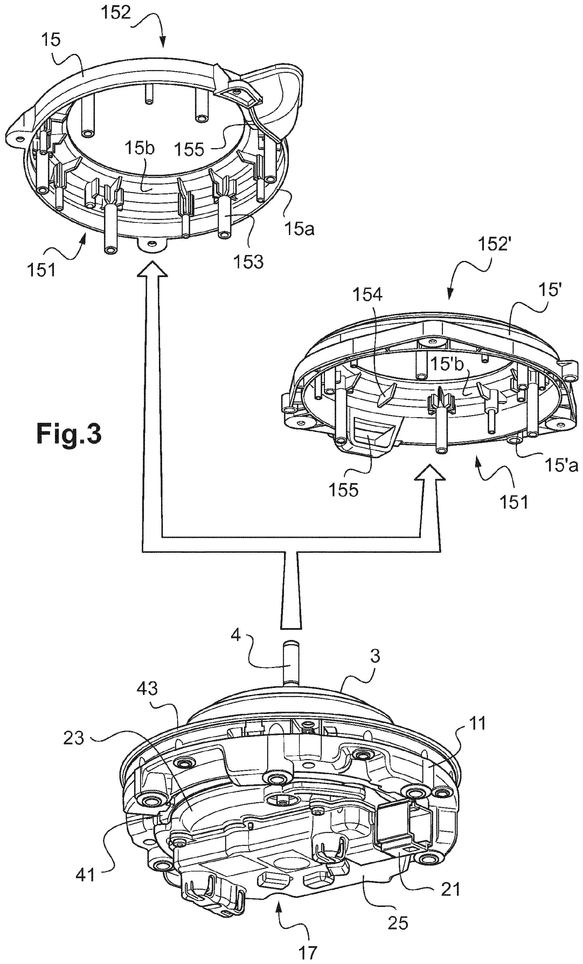

Comme cela est mieux visible sur les figures 2 et 3, l'ensemble support moteur 1 comprend un moteur 3 et un support moteur 11 décrit par la suite.

Le groupe moto-ventilateur comprend en plus de l'ensemble support moteur 1, une roue de ventilateur 5 destinée à être logée dans la volute 2 et destinée à être entraînée par le moteur 3, de façon à assurer la mise en mouvement du flux d'air dans la volute 2. Plus précisément, un flux d'air est aspiré et mis en circulation par la roue de ventilateur 5 puis est extrait de la volute 2 par une sortie raccordée au conduit d'air de l'installation de chauffage, de ventilation et/ou de climatisation.

Concernant le moteur 3, il s'agit en particulier d'un moteur 3 sans balai (appelé également machine synchrone auto-pilotée à aimants permanents). Le moteur 3 comporte un stator fixe et un rotor mobile par rapport au stator et apte à entraîner la roue de ventilateur 5.

Le moteur 3 est disposé autour d'un axe longitudinal A, correspondant à l'axe de rotation du moteur 3. Le moteur 3 comprend un arbre de transmission 4 s'étendant selon l'axe longitudinal A. L'arbre de transmission 4 est par exemple agencé sensiblement au centre du moteur 3. Dans cet exemple, l'arbre de transmission 4 fait saillie du moteur 3 présentant ainsi une extrémité libre.

Le moteur 3 et la roue de ventilateur 5 sont ici coaxiaux.

La roue de ventilateur 5 est montée sur l'arbre de transmission 4 du moteur 3.

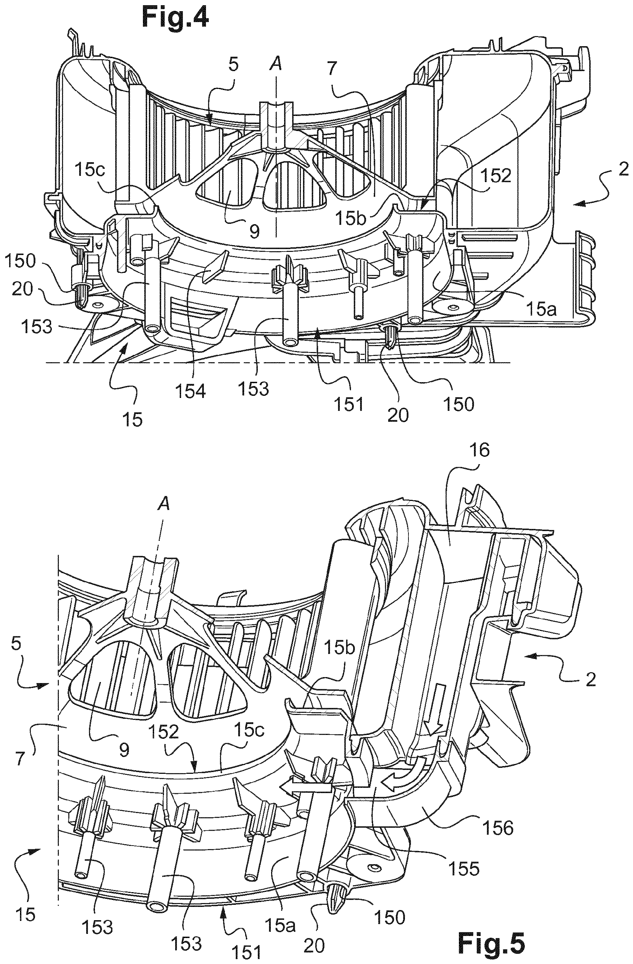

Selon l'exemple de réalisation particulier illustré sur la figure 2, la roue de ventilateur 5 présente quant à elle au moins une partie 7 ayant une forme sensiblement en bol, cette partie est par la suite désignée par bol 7. Le bol 7 est de forme sensiblement concave. En référence à la figure 2, la concavité du bol 7 est orientée vers l'intérieur de la volute 2, lorsque l'ensemble support moteur 1 est monté sur la volute 2. En outre, selon le mode de réalisation particulier illustré sur la figure 4 ou 5, la roue de ventilateur 5 présente un méplat formé à la périphérie du bol 7, du côté destiné à coopérer avec l'ensemble support moteur 1, comme cela sera détaillé par la suite. Autrement dit, le bol 7 se termine par ce méplat. Le méplat s'étend dans cet exemple sensiblement orthogonalement par rapport à l'axe A.

En se référant de nouveau à la figure 2, la roue de ventilateur 5 comporte de plus un moyeu central 8, pour recevoir l'extrémité libre de l'arbre de transmission 4 du moteur 3. La roue de ventilateur 5 peut présenter en outre une forme générale sensiblement cylindrique comprenant des pales ou ailettes 9 qui s'étendent dans cet exemple depuis la périphérie du bol 7, selon une direction sensiblement parallèle à l'axe longitudinal A du moteur 3. Autrement dit, selon le mode de réalisation particulier illustré sur les figures 4 et 5, les pales ou ailettes 9 s'étendent en éloignement par rapport au méplat à la périphérie du bol 7 et sensiblement orthogonalement par rapport à ce méplat.

Comme dit précédemment, l'ensemble support moteur 1 comporte encore un support moteur 11.

Selon le mode de réalisation illustré sur les figures 1 et 2, le support moteur 11 présente une forme générale sensiblement circulaire.

Le support moteur 11 est par exemple réalisé en matériau plastique.

Une fois l'ensemble support moteur 1 assemblé sur la volute 2, le support moteur 11 fait saillie latéralement sur le côté de la volute 2, comme cela est mieux visible sur la figure 1.

Le côté de la volute 2 présentant l'ouverture obturée par l'ensemble support moteur 1, notamment par le support moteur 11, s'étend par exemple selon un plan perpendiculaire à l'axe A.

Afin de permettre l'assemblage du support moteur 11 sur la volute 2, l'ensemble support moteur 1 comprend en outre une pièce de raccordement 15 ou 15' interposée entre le support moteur 11 et la volute 2. La pièce de raccordement 15 ou 15' est agencée de manière à faire la jonction entre le support moteur 11 d'un côté et la volute 2 destinée à loger la roue de ventilateur 5 de l'autre côté.

On a représenté sur la figure 1 un ensemble support moteur 1 avec une pièce de raccordement 15 selon un premier mode de réalisation, et sur la figure 2 un ensemble support moteur 1 avec une pièce de raccordement 15' selon un deuxième mode de réalisation.

Cette pièce de raccordement 15, 15' peut être adaptée selon les besoins. En effet, comme schématisé sur la figure 3, selon l'installation de chauffage, de ventilation et/ou de climatisation dans laquelle l'ensemble support moteur 1 doit être intégré, le même support moteur 11 peut être assemblé à une pièce de raccordement 15 ou 15' différente.

La pièce de raccordement 15 illustrée sur les figures 1 et 3 peut par exemple être adaptée pour une volute 2 d'un premier type d'installation de chauffage, de ventilation et/ou de climatisation, tandis que la pièce de raccordement 15' illustrée sur les figures 2 et 3 peut par exemple être adaptée pour une volute 2 d'un deuxième type d'installation de chauffage, de ventilation et/ou de climatisation. On peut citer à titre d'exemple non limitatif de types d'installation de chauffage, de ventilation et/ou de climatisation qui diffèrent, une installation de chauffage, de ventilation et/ou de climatisation configurée pour un véhicule ayant la conduite à gauche ou une installation de chauffage, de ventilation et/ou de climatisation configurée pour un véhicule ayant la conduite à droite.

La pièce de raccordement 15 ou 15' forme donc une interface entre d'une part le support moteur 11 et d'autre part la volute 2 et la roue de ventilateur 5 logée dans la volute 2 à l'état assemblé de l'ensemble support moteur 1, et notamment du groupe moto-ventilateur, sur le boîtier de l'installation de chauffage, de ventilation et/ou de climatisation.

Cette pièce de raccordement 15, 15' peut être réalisée dans un matériau plastique, tel que du polypropylène par exemple, de façon simple et peu coûteuse.

La pièce de raccordement 15, 15' présente un axe central qui est dans cet exemple confondu avec l'axe longitudinal A du moteur 3. Autrement dit, le moteur 3 et la pièce de raccordement 15, 15' sont disposés autour d'un même axe A, et sont donc coaxiaux.

L'assemblage de la pièce de raccordement 15, 15' à la volute 2 se fait suivant un axe d'assemblage confondu avec l'axe central de la pièce de raccordement 15, 15' et l'axe longitudinal A du moteur 3. De même l'assemblage du support moteur 11 à la pièce de raccordement 15 se fait suivant le même axe d'assemblage confondu avec l'axe central de la pièce de raccordement 15, 15' et l'axe longitudinal A du moteur 3.

La pièce de raccordement 15, 15' est ici destinée à être fixée au niveau de la périphérie de l'ouverture de la volute 2. La fixation peut se faire par tout moyen approprié, par exemple par vissage. Selon l'exemple illustré, la volute 2 peut présenter des plots de fixation 20 qui font saillie de la volute 2 en s'étendant axialement, dans cet exemple, sensiblement parallèlement à l'axe A, et destinés à s'engager et traverser des orifices 150 associés et complémentaires prévus sur la pièce de raccordement 15, 15'.

Afin de permettre le montage de la pièce de raccordement 15, 15' sur la volute 2, la pièce de raccordement 15 ou 15' présente une forme générale complémentaire de la forme de la volute 2. Plus précisément, la pièce de raccordement 15 ou 15' présente une forme complémentaire de la forme de la surface intérieure définie par la volute 2.

A titre d'exemple, tel qu'illustré sur les figures 3 à 5, la pièce de raccordement 15, respectivement 15', présente une jupe sensiblement cylindrique 15a, respectivement 15'a. L'axe de révolution de la jupe cylindrique 15a ou 15'a est selon l'exemple décrit l'axe A.

La jupe cylindrique 15a, respectivement 15'a, est apte à venir en appui contre une paroi intérieure de la volute 2, lorsque l'ensemble support moteur 1 est monté dans l'installation de chauffage, de ventilation et/ou de climatisation.

En référence à la disposition des éléments sur les figures 3 à 5, la jupe cylindrique 15a, respectivement 15'a, forme ici une partie inférieure de la pièce de raccordement 15, respectivement 15'.

La pièce de raccordement 15, respectivement 15', présente en outre selon les exemples de réalisation des figures 3 à 5, une collerette 15b, respectivement 15'b, à la périphérie de la jupe cylindrique 15a, respectivement 15'a, du côté de la pièce de raccordement 15, respectivement 15', destiné à être assemblé à la volute 2. Plus précisément, la collerette 15b, respectivement 15'b, est destinée à être agencée en regard de la roue de ventilateur 5, lorsque l'ensemble support moteur 1 est monté dans l'installation de chauffage, de ventilation et/ou de climatisation. En particulier, la collerette 15b, respectivement 15'b, est par exemple apte à être agencée en regard du méplat à la périphérie du bol 7 de la roue de ventilateur 5.

La collerette 15b (cf. figures 4 et 5) peut s'étendre de façon sensiblement orthogonale par rapport à la jupe cylindrique 15a. La collerette 15b peut être sensiblement plate.

En variante, on peut prévoir que la collerette présente une forme sensiblement bombée en direction de la volute 2 lorsque l'ensemble support moteur 1 est monté sur la volute 2.

En référence à la disposition des éléments sur les figures 3 à 5, la collerette 15b, respectivement 15'b, forme ici une partie supérieure de la pièce de raccordement 15, respectivement 15'.

Enfin selon un mode de réalisation particulier, visible sur les figures 4 et 5, on peut prévoir une saillie 15c à l'extrémité libre de la collerette 15b. Dans cet exemple, la saillie 15c s'étend en éloignement de la jupe cylindrique 15a et de la collerette 15b. La saillie 15c peut s'étendre sensiblement orthogonalement à la collerette 15b. La saillie 15c s'étend ici sensiblement parallèlement à l'axe A. Dans ce cas, la partie supérieure de la pièce de raccordement 15 est en deux pièces 15b et 15c.

Par ailleurs, la pièce de raccordement 15 ou 15' présente une première face 151 et une deuxième face 152 ou 152' opposées l'une à l'autre.

La première face 151 sert d'interface avec le support moteur 11 et est prévue pour permettre l'assemblage avec le support moteur 11. La première face 151 est par exemple définie notamment par la face de la collerette 15b ou 15'b qui est agencée en regard du support moteur 11.

La deuxième face 152 ou 152' est destinée à former une interface avec la volute 2 et est prévue pour permettre l'assemblage avec la volute 2. La deuxième face 152 ou 152' est par exemple définie par la face de la collerette 15b ou 15'b qui est agencée en regard du méplat à la périphérie du bol 7 de la roue de ventilateur 5, lorsque l'ensemble support moteur 1 est monté dans l'installation de chauffage, de ventilation et/ou de climatisation.

Les deux faces 151 et 152, respectivement 151 et 152', sont dans des plans parallèles entre eux et perpendiculaires à l'axe central A de la pièce de raccordement 15, respectivement 15'.

Selon un mode de réalisation préféré, du côté du support moteur 11, la première face 151 peut être sensiblement la même, voire être standard, c'est-à-dire qu'elle peut rester inchangée entre différents modes de réalisation de la pièce de raccordement 15, 15'. En revanche, la deuxième face 152, 152' du côté de la volute 2 peut être différente selon les modes de réalisation, car c'est cette deuxième face 152, 152' qui est changée pour permettre une adaptation à différentes volutes 2 en fonction de l'installation de chauffage, de ventilation et/ou de climatisation dans laquelle l'ensemble support moteur 1 doit être intégré.

Le support moteur 11 peut donc être une pièce standard quelle que soit l'installation de chauffage, de ventilation et/ou de climatisation, et seule la pièce de raccordement 15, 15', et plus précisément sa deuxième face 152 ou 152', est adaptée en fonction des besoins ou exigences liées à cette installation.

Autrement dit, le support moteur 11 peut s'adapter indifféremment à n'importe quelle volute 2 pour n'importe quelle installation de chauffage, de ventilation et/ou de climatisation par l'intermédiaire d'une pièce de raccordement 15 ou 15' qui est définie en conséquence. Avec un même support moteur 11 standard, on peut obtenir des configurations de l'ensemble support moteur 1, et donc du groupe moto-ventilateur, qui diffèrent l'une de l'autre par la pièce de raccordement 15, 15'.

Avantageusement, du côté de la volute 2 et de la roue de ventilateur 5, la pièce de raccordement 15 ou 15' est conçue avec le moins d'aspérités possible. Pour ce faire, la deuxième face 152, 152' présente une surface sensiblement lisse, c'est-à-dire dépourvue autant que possible d'irrégularités ou encore de cavités. Ceci permet de diminuer la génération de bruit ou de perturbation du flux d'air dans la volute 2. Cette adaptation spécifique au flux d'air dans la volute 2 est plus évidente à réaliser sur la pièce de raccordement 15, 15' que sur le support moteur 11 qui servait d'interface avec la volute dans les solutions de l'art antérieur et était donc une pièce très complexe.

En particulier, la deuxième face 152, 152' de la pièce de raccordement 15, 15' est de forme complémentaire de la forme du bol 7 de la roue de ventilateur 5.

Selon un exemple de réalisation, la deuxième face 152 de la pièce de raccordement 15 peut être sensiblement plate.

En variante on peut prévoir que la deuxième face 152' de la pièce de raccordement 15' présente une paroi de forme annulaire sensiblement bombée en direction de la volute 2, ou ici de la roue de ventilateur 5, lorsque l'ensemble support moteur 1 est monté sur la volute 2.

Par ailleurs, du côté du support moteur 11, la pièce de raccordement 15, 15' est par exemple destinée à être fixée au niveau de la périphérie du support moteur 11.

Pour permettre la fixation de la pièce de raccordement 15, 15' au support moteur, la pièce de raccordement 15, 15' peut présenter des picots de fixation 153 (mieux visibles sur la figure 4) qui font saillie de la première face 151 et s'étendent axialement depuis la première face 151 en direction du support moteur 11. Selon cet exemple, les picots de fixation 153 s'étendent sensiblement parallèlement à l'axe central A de la pièce de raccordement 15, 15'. Les picots de fixation 153 sont destinés à traverser des orifices associés du support moteur 11 lors de l'assemblage. Afin d'assurer une liaison mécanique entre d'une part le support moteur 11 et les éléments qu'il porte et d'autre part la pièce de raccordement 15, 15' on peut prévoir de déformer les picots de fixation 153, par exemple selon un procédé de bouterollage, après passage au travers du support moteur 11. Bien entendu tout autre moyen approprié peut être prévu pour l'assemblage de la pièce de raccordement 15, 15' au support moteur 11, notamment par vissage ou encore par clipsage. Les picots de fixation 153 sont par exemple prévus sur la face de la collerette 15b ou 15'b agencée en regard du support moteur 11.

La pièce de raccordement 15 ou 15', selon l'un ou l'autre des modes de réalisation illustrés sur les figures 2 à 5, peut encore comprendre plusieurs nervures de rigidification 154. Les nervures de rigidification 154sont par exemple prévues sur la face de la collerette 15b ou 15'b agencée en regard du support moteur 11.

Avantageusement, la pièce de raccordement 15, 15' intègre de plus une fonction de refroidissement du moteur 3.

Plus précisément, en référence à la figure 5, la pièce de raccordement 15, 15' peut comprendre au moins une portion de guidage 155 d'un flux d'air de refroidissement en provenance de l'intérieur de la volute 2.

A cet effet, la ou chaque portion de guidage 155 d'un flux d'air de refroidissement est agencée en communication aéraulique avec la volute 2, plus précisément avec un canal d'écoulement d'air 16 prévu sur la volute 2, du côté de la volute 2 portant l'ensemble support moteur 1, à l'état assemblé de l'ensemble support moteur 1 sur la volute 2. Selon l'exemple illustré, le canal d'écoulement 16 s'étend sensiblement parallèlement à l'axe longitudinal A du moteur 3 confondu avec l'axe central de la pièce de raccordement 15, 15'. Le canal d'écoulement d'air 16 est par exemple de forme sensiblement cylindrique. Bien entendu, toute autre forme peut être envisagée. En outre, le canal d'écoulement d'air 16 est agencé sur la volute 2 sur une partie extérieure à l'ouverture recevant la roue de ventilateur 5 du groupe moto-ventilateur, ici à proximité de la périphérie de l'ouverture de la volute 2. Plus précisément, le canal d'écoulement d'air 16 est agencé radialement à l'extérieur de l'ouverture recevant la roue de ventilateur 5.

De façon complémentaire, la ou chaque portion de guidage 155 d'un flux d'air de refroidissement comprend une entrée d'air prévue sur la deuxième face 152, 152' de la pièce de raccordement 15, 15'. L'entrée d'air présente une forme complémentaire de la forme du canal d'écoulement d'air 16 de la volute 2, par exemple une forme sensiblement circulaire. La portion de guidage 155 est agencée de sorte que l'entrée d'air de la portion de guidage 155 soit en vis-à-vis du canal d'écoulement d'air 16 de la volute 2. Ici, la portion de guidage 155 est prévue sur la périphérie de la pièce de raccordement 15, 15' à l'extérieur de la zone destinée à recevoir le support moteur 11, plus précisément sur une zone de rebord radialement à l'extérieur de la zone destinée à recevoir le support moteur 11.

En outre, la portion de guidage 155 débouche au niveau de la première face 151 d'interface avec le support moteur 11, plus précisément débouche sur l'intérieur de la pièce de raccordement 15, 15' destiné à recevoir le support moteur 11. De la sorte, le flux d'air de refroidissement en provenance de la volute 2 ayant traversé le canal d'écoulement d'air 16 de la volute 2 puis l'entrée d'air de la portion de guidage 155 de la pièce de raccordement 15, 15' arrive sur l'intérieur de la pièce de raccordement 15, 15' du côté du support moteur 11. Le support moteur 11 est donc exposé au flux d'air de refroidissement, et par conséquent les éléments portés par le support moteur 11 sont également exposés à ce flux d'air de refroidissement. Le moteur 3 peut donc être refroidi par ce flux d'air de refroidissement.

Le flux d'air de refroidissement traversant le canal d'écoulement d'air 16 de la volute 2 et la portion de guidage 155 de la pièce de raccordement 15, 15' est schématisé par des flèches sur la figure 5.

Selon l'exemple illustré sur la figure 5, la pièce de raccordement 15, 15' présente une bride 156 sur une zone de rebord radialement à l'extérieur de la zone destinée à recevoir le support moteur 11. La bride 156 est destinée à être assemblée sur la volute 2. L'intérieur de cette bride 156 est conformé de manière à présenter la portion de guidage 155 destinée à être traversée par le flux d'air de refroidissement en provenance de la volute 2.

La bride 156 peut présenter une partie sensiblement coudée permettant de guider le flux d'air de refroidissement ayant traversé le canal d'écoulement d'air 16 de la volute 2 vers l'intérieur de la pièce de raccordement 15, 15' du côté du support moteur 11.

Ainsi, un refroidissement efficace peut être obtenu par l'exposition du moteur 3 au flux d'air régnant dans la volute 2. Le support moteur 11 ne nécessite pas de présenter également une fonction de refroidissement du moteur 3 et peut donc être de conception plus simple que dans les solutions de l'art antérieur.

Avantageusement, l'ensemble support moteur 1 comporte en outre un module de commande 17 du moteur 3. En référence aux figures 1 et 2, le module de commande 17 peut comprendre un circuit de commande tel qu'une carte de circuit imprimé (non représentée) connue sous le sigle anglais PCB pour « Printed Circuit Board », supportant un ensemble de composants électriques et/ou électroniques permettant de piloter le moteur 3. Le module de commande 17 peut comprendre en outre au moins un connecteur 21 destiné à être relié à un faisceau du véhicule, notamment pour amener de l'énergie et/ou au moins un signal de commande au circuit de commande.

L'ensemble support moteur 1 peut comprendre un support 23 du module de commande 17 sur lequel est agencé le module de commande 17. Autrement dit le circuit de commande et le connecteur 21 sont portés par ce support 23 du module de commande 17. Selon un mode de réalisation préféré, le support 23 du module de commande 17 fait également office de support de palier pour le moteur 3.

Selon le mode de réalisation illustré sur les figures 1 et 2, le support 23 du module de commande 17 présente une forme générale sensiblement circulaire.

Par ailleurs, l'ensemble support moteur 1 peut encore comprendre un radiateur de refroidissement, par exemple au niveau du support 23 du module de commande 17, pour évacuer la chaleur produite par les composants électriques et/ou électroniques portés par le circuit de commande 19. Le support 23 du module de commande 17 est avantageusement réalisé en aluminium.

En alternative ou en complément, le flux d'air de refroidissement en provenance de la volute 2 débouchant par la portion de guidage 155 de la pièce de raccordement 15, 15' peut contribuer au refroidissement du module de commande 17.

Le module de commande 17 est disposé sur le support 23 du module de commande 17 du côté opposé au support moteur 11. Le module de commande 17 peut être fixé par tout moyen approprié au support 23 du module de commande 17, par exemple par vissage.

On peut prévoir de plus un capot de protection 25 agencé au-dessus du module de commande 17, de façon à recouvrir les composants électriques et/ou électroniques portés par le circuit de commande, et fixé au support 23 du module de commande 17.

Le support 23 du module de commande 17 est avantageusement aligné au support moteur 11 selon l'axe longitudinal A du moteur 3 et est assemblé au support moteur 11 selon un axe d'assemblage qui est confondu avec l'axe longitudinal A du moteur 3. L'assemblage du support 23 du module de commande 17 avec le support moteur 11 peut se faire par tout moyen approprié, par exemple par vissage, rivetage ou bouterollage.

Ainsi, tous ces éléments, à savoir le module de commande 17 comprenant par exemple un circuit de commande et un ou plusieurs connecteurs 21, le support 23 du module de commande 17 et le moteur 3, sont assemblés au support moteur 11 de manière à former un bloc qui est à son tour assemblé à la roue de ventilateur 5 et à la volute 2 par l'intermédiaire de la pièce de raccordement 15, 15'.

L'ensemble support moteur 1 peut encore comprendre au moins un moyen d'étanchéité 41 mieux visible sur la figure 2, disposé entre le support moteur 11 et le support 23 du module de commande 17, et au moins un moyen d'étanchéité 43 disposé entre le support moteur 11 et la pièce de raccordement 15, 15'.

Le moyen d'étanchéité 41, respectivement 43, est par exemple prévu au niveau des moyens de fixation entre le support moteur 11 et le support 23 du module de commande 17, respectivement la pièce de raccordement 15, 15'. Ceci permet d'éviter une intrusion d'eau notamment. On peut aussi prévoir que le moyen d'étanchéité 41, 43 atténue la transmission des vibrations du moteur 3 à la volute 2.

Le moyen d'étanchéité 41, 43 est par exemple en matériau élastomère. Le moyen d'étanchéité 41, 43 peut être réalisé par un surmoulage du support moteur 11.

Ainsi, une pièce de raccordement 15, 15' selon l'invention permet d'adapter de façon simple et peu coûteuse l'ensemble support moteur 1 et donc le groupe moto-ventilateur en fonction de l'installation de chauffage, de ventilation et/ou de climatisation sur laquelle l'ensemble support moteur 1 et plus généralement le groupe moto-ventilateur doit être intégré.

En effet, la pièce de raccordement 15, 15' est conçue spécifiquement selon l'installation de chauffage, de ventilation et/ou de climatisation. Cet assemblage de l'ensemble support moteur 1 sur l'installation de chauffage, de ventilation et/ou de climatisation est réalisé grâce à une première face 151 de la pièce de raccordement 15, 15', cette première face 151 pouvant être standard, et formant interface avec le support moteur 11, et grâce à une deuxième face 152, 152', conçue spécifiquement pour former une interface avec la volute 2.

La pièce de raccordement 15, 15' est multifonctions, et assure notamment une fonction de montage du support moteur 11 sur la volute 2, une fonction d'interface avec le support moteur 11, une fonction d'interface avec la volute 2 et la roue de ventilateur 5 avec le moins d'aspérités possible de façon à réduire le risque de génération de bruit, tout en respectant les exigences de performance aéraulique. D'autres fonctions peuvent aussi être assurées par cette pièce de raccordement 15, 15' comme le guidage d'un flux d'air pour le refroidissement du moteur 3 et/ou du module de commande 17 pour piloter le moteur 3.

Toutes ces fonctions n'ont plus à être supportées par le support moteur 11 dont la conception peut être simplifiée.

Ainsi, quelle que soit l'installation de chauffage, de ventilation et/ou de climatisation dans laquelle l'ensemble support moteur 1, et donc le groupe moto-ventilateur doit être implanté, il n'est plus nécessaire de modifier le support moteur 11, ce qui permet d'utiliser un support moteur 11 standard, et en conséquence limite les coûts de fabrication.

Tous les éléments de l'ensemble support moteur 1 assemblés à la volute 2 par le biais de la pièce de raccordement 15, 15' peuvent être standardisés, seule une face 152, 152' de la pièce de raccordement 15, 15' d'interface avec la volute 2 et la roue de ventilateur 5 doit être adaptée selon l'application, ce qui permet de diminuer les coûts de fabrication.

## Revendications

1. Ensemble support moteur, destiné à être monté au niveau d'une volute (2), l'ensemble support moteur (1) comprenant :
- un moteur (3), et
- un support moteur (11),
l'ensemble support moteur comportant une pièce de raccordement (15, 15'), d'une part, assemblée au support moteur (11) et, d'autre part, destinée à être assemblée à la volute (2), de manière à former une interface entre le support moteur (11) et la volute (2), la pièce de raccordement (15, 15') et le support moteur (11) étant deux pièces distinctes, la pièce de raccordement (15, 15') présentant :
- une première face (151) en regard du support moteur (11) et
- une deuxième face (152, 152') opposée destinée à coopérer avec la volute (2), **caractérisé en ce que** la pièce de raccordement (15, 15') comprend au moins une portion de guidage (155) d'un flux d'air de refroidissement présentant une entrée d'air au niveau de la deuxième face (152, 152') et débouchant au niveau de la première face (151) .

2. Ensemble support moteur selon la revendication précédente, dans lequel la deuxième face (152, 152') de la pièce de raccordement (15, 15') présente une surface sensiblement lisse.

3. Ensemble support moteur selon l'une des revendications précédentes, dans lequel la pièce de raccordement (15, 15') présente au moins une bride (156) agencée radialement à l'extérieur de la zone de réception du support moteur (11) et comprenant ladite au moins une portion de guidage (155) du flux d'air de refroidissement.

4. Ensemble support moteur selon la revendication 3 prise en combinaison avec l'une quelconque des revendications précédentes, dans lequel le moteur (3) et la pièce de raccordement (15, 15') sont coaxiaux.

5. Ensemble support moteur selon l'une quelconque des revendications précédentes,
- comprenant un module de commande (17) du moteur (3) et un support (23) du module de commande (17) assemblé au support moteur (11), le module de commande (17) étant disposé sur le support (23) du module de commande (17) du côté opposé au support moteur (11), et
- dans lequel l'ensemble formé par le module de commande (17), le support (23) du module de commande (17) et le support moteur (11) est assemblé à la pièce de raccordement (15, 15').

6. Ensemble support moteur selon l'une quelconque des revendications précédentes, dans lequel le moteur (3) est un moteur sans balai.

7. Installation de chauffage, de ventilation et/ou de climatisation pour véhicule automobile **caractérisée en ce qu'**elle comprend une volute (2) et au moins un ensemble support moteur (1) conforme à l'une quelconque des revendications précédentes monté sur la volute (2).

8. Installation selon la revendication précédente, dans lequel la pièce de raccordement (15, 15') est, lorsque l'ensemble support moteur (1) est monté dans ladite installation, interposée entre le support moteur (11) et une roue de ventilateur (5) logée dans la volute (2) et apte à être entraînée par le moteur (3).

9. Installation selon la revendication précédente, dans lequel la pièce de raccordement (15, 15') comporte :
- une jupe (15a, 15'a) sensiblement cylindrique et
- une collerette (15b, 15'b) à la périphérie de ladite jupe (15a, 15'a) agencée en regard de la périphérie de la roue de ventilateur (5), lorsque l'ensemble support moteur (1) est monté dans ladite installation.

## Patentansprüche

1. Motorträgeranordnung, welche dazu bestimmt ist, an einem Spiralgehäuse (2) angebracht zu werden, wobei die Motorträgeranordnung (1) umfasst:
- einen Motor (3) und
- einen Motorträger (11),
wobei die Motorträgeranordnung ein Anschlussteil (15, 15') aufweist, das einerseits mit dem Motorträger (11) verbunden ist und andererseits dazu bestimmt ist, mit dem Spiralgehäuse (2) verbunden zu werden, um eine Schnittstelle zwischen dem Motorträger (11) und dem Spiralgehäuse (2) zu bilden, wobei das Anschlussteil (15, 15') und der Motorträger (11) zwei verschiedene Teile sind, wobei das Anschlussteil (15, 15') aufweist:
- eine erste Seite (151) gegenüber dem Motorträger (11) und
- eine gegenüberliegende zweite Seite (152, 152'), die dazu bestimmt ist, mit dem Spiralgehäuse (2) zusammenzuwirken,
**dadurch gekennzeichnet, dass** das Anschlussteil (15, 15') mindestens einen Führungsabschnitt (155) für einen Kühlluftstrom umfasst, der einen Lufteinlass an der zweiten Seite (152, 152') aufweist und an der ersten Seite (151) mündet.

2. Motorträgeranordnung nach dem vorhergehenden Anspruch, wobei die zweite Seite (152, 152') des Anschlussteils (15, 15') eine im Wesentlichen glatte Oberfläche aufweist.

3. Motorträgeranordnung nach einem der vorhergehenden Ansprüche, wobei das Anschlussteil (15, 15') mindestens einen Flansch (156) aufweist, der radial außerhalb des Aufnahmebereichs des Motorträgers (11) angeordnet ist und den mindestens einen Führungsabschnitt (155) für den Kühlluftstrom umfasst.

4. Motorträgeranordnung nach Anspruch 3 in Kombination mit einem der vorhergehenden Ansprüche, wobei der Motor (3) und das Anschlussteil (15, 15') koaxial sind.

5. Motorträgeranordnung nach einem der vorhergehenden Ansprüche,
- welche ein Steuermodul (17) des Motors (3) und einen mit dem Motorträger (11) verbundenen Träger (23) des Steuermoduls (17) umfasst, wobei das Steuermodul (17) auf dem Träger (23) des Steuermoduls (17) auf der dem Motorträger (11) gegenüberliegenden Seite angeordnet ist, und
- in welcher die Anordnung, die von dem Steuermodul (17), dem Träger (23) des Steuermoduls (17) und dem Motorträger (11) gebildet wird, mit dem Anschlussteil (15, 15') verbunden ist.

6. Motorträgeranordnung nach einem der vorhergehenden Ansprüche, wobei der Motor (3) ein bürstenloser Motor ist.

7. Heizungs-, Lüftungs- und/oder Klimaanlage für ein Kraftfahrzeug, **dadurch gekennzeichnet, dass** sie ein Spiralgehäuse (2) und mindestens eine Motorträgeranordnung (1) gemäß einem der vorhergehenden Ansprüche, die am Spiralgehäuse (2) angebracht ist, umfasst.

8. Anlage nach dem vorhergehenden Anspruch, wobei das Anschlussteil (15, 15'), wenn die Motorträgeranordnung (1) in der Anlage angebracht ist, zwischen dem Motorträger (11) und einem Lüfterrad (5), das im Spiralgehäuse (2) aufgenommen ist und vom Motor (3) angetrieben werden kann, angeordnet ist.

9. Anlage nach dem vorhergehenden Anspruch, wobei das Anschlussteil (15, 15') aufweist:
- eine im Wesentlichen zylindrische Schürze (15a, 15'a) und
- einen Kragen (15b, 15'b) am Umfang der Schürze (15a, 15'a), der gegenüber dem Umfang des Lüfterrades (5) angeordnet ist, wenn die Motorträgeranordnung (1) in der Anlage angebracht ist.

## Claims

1. Motor support unit, intended to be mounted on a volute (2), the motor support unit (1) comprising:
- a motor (3), and
- a motor support (11),
the motor support unit comprising a connection piece (15, 15'), on the one hand, fitted on the motor support (11) and, on the other hand, intended for fitting on the volute (2) in such a manner as to form an interface between the motor support (11) and the volute (2), the connection piece (15, 15') and the motor support (11) being two distinct pieces, the connection piece (15, 15') having:
- a first face (151) facing the motor support (11), and
- a second, opposite face (152, 152') intended to cooperate with the volute (2), **characterized in that** the connection piece (15, 15') comprises at least one portion (155) for guiding a flow of cooling air, which has an air inlet on the second face (152, 152') and opens out on the first face (151) .

2. Motor support unit according to the preceding claim, wherein the second face (152, 152') of the connection piece (15, 15') has a substantially smooth surface.

3. Motor support unit according to either of the preceding claims, wherein the connection piece (15, 15') has at least one flange (156) arranged radially on the exterior of the reception zone of the motor support (11) and comprising said at least one portion (155) for guiding the flow of cooling air.

4. Motor support unit according to Claim 3, taken in combination with any one of the preceding claims, wherein the motor (3) and the connection piece (15, 15') are coaxial.

5. Motor support unit according to any one of the preceding claims,
- comprising a control module (17) of the motor (3) and a support (23) of the control module (17) fitted on the motor support (11), the control module (17) being arranged on the support (23) of the control module (17) on the side opposite the motor support (11), and
- wherein the unit formed by the control module (17), the support (23) of the control module (17) and the motor support (11) is fitted on the connection piece (15, 15').

6. Motor support unit according to any one of the preceding claims, the motor (3) is a brushless motor.

7. Heating, ventilation and/or air conditioning installation for a motor vehicle, **characterized in that** it comprises a volute (2) and at least one motor support unit (1) according to any one of the preceding claims mounted on the volute (2).

8. Installation according to the preceding claim, wherein, when the motor support unit (1) is mounted in said installation, the connection piece (15, 15') is interposed between the motor support (11) and a fan impeller (5) housed in the volute (2) and capable of being driven by the motor (3).

9. Installation according to the preceding claim, wherein the connection piece (15, 15') comprises:
- a substantially cylindrical skirt (15a, 15'a), and
- a collar (15b, 15'b) at the periphery of said skirt (15a, 15'a) arranged facing the periphery of the fan impeller (5) when the motor support unit (1) is mounted in said installation.
